# EUROPEAN PATENT APPLICATION

(11) **EP 3 315 393 A1**
(43) Date of publication of application: **02.05.2018**
(21) Application number: 16466013.6
(22) Date of filing: 31.10.2016
(51) Int. Cl.: B62K 21/16

(54) **HANDLEBAR STEM FOR TWO-WHEEL VEHICLE**

(71) Applicant: KOSTKA - kolobka, s.r.o., 788 33 Hanusovice (CZ)
(72) Inventor: Kostka, Marek, 788 33 Hanusovice (CZ)

(57) **Abstract**

A stem of a two-wheel vehicle is arranged in two shape versions, namely a stem (10A) and a stem (10B), while the stem (10A) is divided into the front part (11A) and a rear part (12), while the front part (11A) contains a protrusion (14), a bevel (16) and a recess (35), and where the rear part (12) contains a recess (13), an edge (17) and a dowel pin (30), while the stem (10A) further contains a flange (18) containing also a recess (35), and it further contains a locking device (13), which consists of an arrestment bolt (23), which consists of a lower part (27), a middle part (28) and a upper part (29), a flexible washer (24), an arrestment nut (25), a lid (26) and a locking ring (34), and where the stem (10B) is also divided into an extended front part (11B) and a rear part (12) and it contains other parts, which are equal to all those parts forming the stem (10A), while the extended front part (11B) contains a through hole (31) or a blind hole (32) and further a lid (33) and where on the front part (11A) and on the extended front part (11B) as well as on the flange (18), for both shape versions, there is made a longitudinal recess (35), where the shape version of the stem (10A) is divided with a oblique cut to the front part (11A) and the rear part (12), while the said oblique cut is made under the angle of 45° towards the imaginary longitudinal axis of the stem (10A) and where the shape version of the stem (10B) is also divided with a oblique cut to the front part (11A) and the rear part (12), while the said oblique cut is also made under the angle of 45° towards the imaginary longitudinal axis of the stem (10B).

## Description

### Field of Technology

The invention relates to a handlebar stem for two-wheel vehicles that connects the said handlebars to a headset tube, to which a fork of a front wheel of the two-wheel vehicle is fitted, while the stem consists of two parts and its design arrangement allows turning of these two parts by 180° against each other, as a result of which the imaginary axis of the said handlebars gets into parallel position with the imaginary axis of the two-wheel vehicle, and where in the front parts of one possible variants of the stem a through or blind hole is made, which forms an storage space into which small tools, inner tube repair kit or small spare parts necessary for fast repair of the two-wheel vehicle can be placed, and where on the said front parts of both possible variants of the stem a longitudinal recess is made, into which an unmarked holder can be fitted by means of unmarked fastening devices, carrying for example a light, a GPS or an adapter for a dog leash, or also a map holder.

### Present Level of Technology

One of the known solutions of the stem for two-wheel vehicles is a design, where the stem is formed as a single unit, which only enables fastening of handlebars and mounting of the stem onto the headset tube of the front fork. Design arrangement of some makes of this stem design is, that the said stem is even over its whole length.
In another known case, the front part of the stem for two-wheel vehicles to which handlebars are mounted, is inclined upwards in certain angle. The advantage of such upwards inclination is that higher handlebars position creates better riding conditions for the rider.

The disadvantage of these known solutions of the stem is, that although they fulfil the reason for which they are indispensable part of two-wheel vehicles body, which is removable fastening of the said component to the handlebars and also to the headset tube, in which the front fork is mounted, however the said design of all so far known design versions of stem does not enable to adjust the handlebars into such a position that the imaginary axis of the said handlebars would be parallel to the imaginary axis of the two-wheel vehicle, which provides substantial spatial decrease of the said two-wheel vehicle.

Another, disadvantage of the presently known designs of stem for two-wheel vehicles, as well as the design of presently known parts of two-wheel vehicles, that is above all the frame or the handlebars, is that they do not incorporate a space into this it would be possible to place tools for basic small repairs or a inner tube repair kit.
If the rider of a two-wheel vehicle wants to be equipped with even the minimal tools or an inner tube repair kit, most importantly for prolonged journeys, he has to solve this requirement otherwise. One possibility how to store the tools is to use a pannier fitted to the handlebars or to another suitable place at the two-wheel vehicle. Another possibility is for example to use a bicycle pump with inner storage space. One of the known designs of the bicycle pump with storage space is the one according to the utility model CZ4671.

Yet another disadvantage of so far known designs of the stem for two-wheel vehicles is that they do not include any design feature that would enable to connect i.e. a light, a GPS, an adapter for a dog leash, a map holder or similar accessory.

### Disclosure of the Invention

The above-described disadvantages will be within a substantial extent removed and the goals of the invention will be fulfilled by the handlebar stem, which enables to removable fastening of the handlebars and removable and simultaneously rotating fastening of the headset tube, in which the front fork is placed, while the stem is arranged in two design variants, when in one of the shape variants the stem is divided into the front and the rear parts, while the front part incorporates a protrusion, a bevel and a recess, and where the rear part incorporates a countersink, an edge and a dowel pin, where this version of the stem incorporates also a flange containing, too, a recess, and the said version of the stem incorporates also a securing device, consisting of an arresting bolt, which consists of the lower part, the middle part and the upper part, a flexible washer, an arresting nut, a cover and a lock ring, and where further shape arrangement of the stem is also divided, namely to the extended front part that includes a through hole or a blind hole, further a lid and a countersink, and the rear part, while this said shape arrangement of the stem incorporates also other parts, which are identical to all parts of which consists the firstly described version of the stem, whose principle consists in that one shape arrangement of the stem is divided by an oblique cut into the front part and the rear' part, while the said oblique cut is made in the angle of 45° towards the imaginary longitudinal axis of the stem and where further shape arrangement of the stem is also divided by the oblique cut into the extended front part and the rear part, while the said oblique cut is made in the angle of 45° towards the imaginary longitudinal axis of the stem. And further by the fact that on the face of the front part of the first shape variant of the stem as well as on the face of extended front part of the second shape variant of the stem there is formed a triangular protrusion, which is for both said parts arranged in obtuse angle within the range from 90° to 150°, and further there is a dowel pin at the face of the front part as well as at the extended front part. And further by the fact that one of the legs of the triangular protrusion, which is formed on the face of the front part as well as on the face of the extended front part, transforms in its highest point by smooth curve into the other plane of the leg of the triangular protrusion. And further by the fact that on the face of the rear part, for both shape versions of the stem, there is formed a triangular recess, which is arranged in obtuse angle within the range from 90° to 150°, while the said protrusion and the said recess are equal in shape and size. And further by the fact that one of the legs of the triangle recess formed on the face of the rear part for both shape versions of the stem transforms in its lowest point by smooth curve into the other arm of the said triangular recess. And further by the fact that on the upper side of the front part as well as on the upper side of the flange, for both the first shape version and the second shape version, there are formed longitudinal recesses equal in size and shape, which are arranged within the imaginary axis of both mentioned versions of the stem. And further by the fact that for both the first shape version and the second shape version of the stem, there is formed an oblique trough hole in the rear part, which is the same axis continues into the front part or into the extended front part, where it is terminated like a blind hole and fitted with a fine-pitched thread, while the diameter of the oblique through hole, which is formed in the rear part, is larger than the diameter of the oblique blind hole, which is formed in the front part or the extended front part. And further by the fact that an arrestment bolt whose upper end is fitted with fine-pitched thread and an arrestment nut is placed onto it is inserted into the through hole, which is formed in the rear part of both shape versions of the stem, while the said arrestment bolt is also fitted with fine-pitched thread on its lower end, which is inserted into the blind hole, which is made in the front part or the extended front part and which is also fitted with fine-pitched thread. And yet by the fact that the size of the thread, which is formed on the lower end of the arrestment bolt and also its length are equal to all sizes of the thread, which is formed in the blind hole made in the front part of the extended front part, for both shape versions of the stem. And further by the fact that the lower end of the arrestment bolt is separated from the upper end by a middle part, while on the upper end, which is fitted by the thread, a flexible washer, a safety ring and an arrestment nut are placed, with the threaded hole of the arrestment nut being closed by a plug. And further by the fact that a bevel is formed on the front part of the first shape version of the stem and the extended front part of the second shape version of the stem and at the same time there is a modified edge on the rear part of both shape versions of the stem. And further by the fact that a storage space is arranged inside the extended front part of the second shape version of the stem, which is formed line a through hole or like a blind hole in another case, while the entrances into he through hole or the blind hole of the said storage space are fitted with lids. And further by the fact that on the upper side of the front part as well as on the upper side of the flange of the first shape version there is a longitudinal recess, and a longitudinal recess of equal shape and size is made in the upper side of the extended front part as well as on the upper side of the flange for the second shape version.

The said design solution, for both versions of the stem, enables with advantage to reduce the size of the two-wheel vehicle when required by the circumstances. These circumstances may occur for example when it is necessary to store the two-wheel vehicle into a car trunk, while the said vehicle couldn't be stored into the car trunk when in the riding setting. A similar situation occurs in the case when the two-wheel vehicle is to be transported on a roof of a car, where some more two-wheel vehicles are placed already. There are more similar cases, when it is necessary to reduce the spatial dimensions of a two-wheel vehicle and when it is advantageous to do so without disassembling the handlebars, using the advantage of the design solution of the stem according to this invention, which enables to adjust the handlebars into such a position, that the imaginary axis of the said handlebars would be parallel to the imaginary axis of the two-wheel vehicle, which would substantially reduce the spatial dimensions of the quoted two-wheel vehicle.

Another advantage is, that a longitudinal recess is formed at both shape versions of the stem, into which can be mounted i.e. a light, a GPS, a dog leash adapter or a map holder and other similar accessories, which suit for additional rider's comfort.

Yet another advantage is, that in the extended front part of the second shape version of the stem, there is formed a storage space, which is made like a through hole or in another case like a blind hole, into which small tools, inner tube repair kit or other small parts necessary for fast repair of the two-wheel vehicle can be stored.

### Layout of Illustrations at the Drawings

The subjected invention shall be further more closely described at a specific version, which is shown as an example, which however cannot be considered to be limiting in any way, with reference to the enclosed illustrations, where:
- FIG. 1: illustratively represents overall axonometric view on one of many possible arrangements of the stem, into which handlebars are removably mounted, and on part of the headset tube of the front fork of the two-wheel vehicle;
- FIG. 2: represents overall axonometric view of the stem;
- FIG. 3: represents axonometric view of the front part of the stem, fitted with triangularshape protrusion;
- FIG. 4: represents detailed axonometric view of the rear part of the stem, fitted with triangular-shape recess;
- FIG. 5: represents in orthogonal projection and partial cross-section a detailed view of both parts of the stem, which are fitted with the arrestment nut;
- FIG. 6: represents in orthogonal projection and partial cross-section a detailed view of the arrestment device with the arrestment nut;
- FIG. 7: represents overall axonometric view of the stem, whose individual parts are axially shifted and at the same time turned by 180° against each other;
- FIG. 8: represents overall axonometric view of the stem, in whose front part a storage space is formed;
- FIG. 9: represents overall axonometric view of the stem, in whose front part the storage space is formed, which is fitted with a lid;
- FIG. 10: represents in orthogonal projection and partial cross-section a detailed view of the stem, in whose front part the storage space is formed;

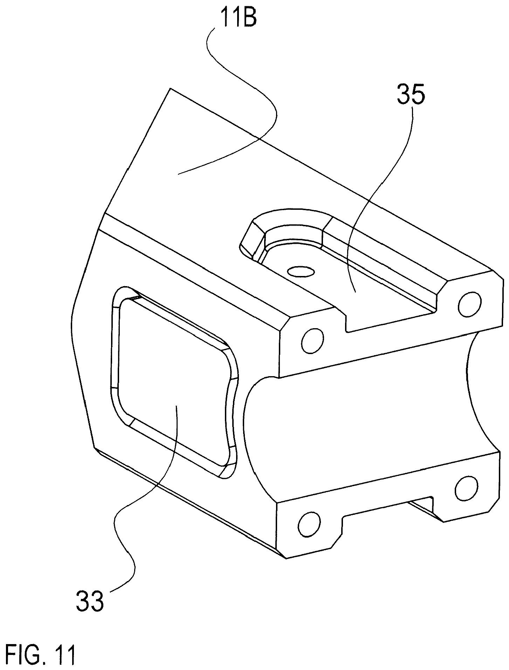

- FIG. 11: represents detailed axonometric view of the front part of the stem, in which the storage space is formed, which is fitted with a lid;
- FIG. 12: represents detailed axonometric view of the front part of the stem, in which the storage space is formed, which is fitted with a lid, and the same time on the upper surface of the stem a recess is formed, which serves for example for mounting of a light;
- FIG. 13: represents overall axonometric view of the stem with the handlebars and with part of the headset tube of the front fork in such a position, when the rear part of the stem together with the handlebars is turned towards the front part of the stem by 180°;
- FIG. 14: represents another overall axonometric view of the stem with the handlebars and with part of the headset tube of the front fork in such a position, when the rear part of the stem together with the handlebars is turned towards the front part of the stem by 180°.

### Example of Implementation of the Invention

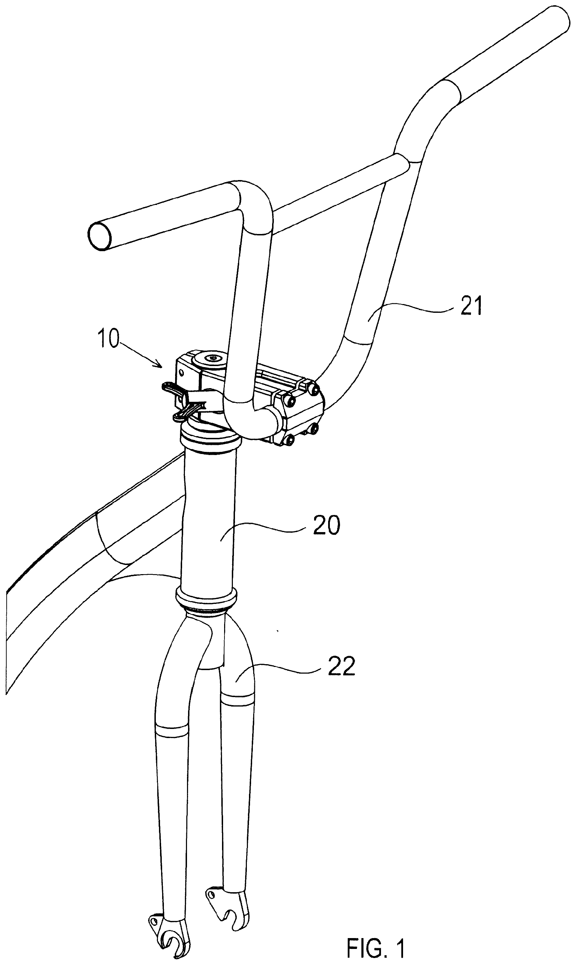

At FIG. 1, one of many possible variants of the stem 10 according to the invention, which enables removable fastening of the handlebars 21 as well as removable and at the same time turnable fastening of the head tube 20 with the front fork 22, is shown. Some of the possible variants of the stem 10 are described in detail in further text and shown on the enclosed illustrations. Two of many possible variants of the stem 10 are in further text marked as stem 10A and stem 10B for better clarity.

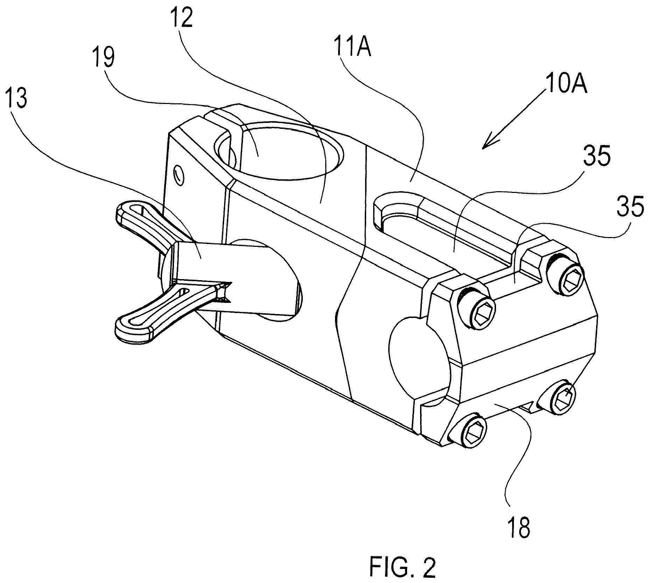

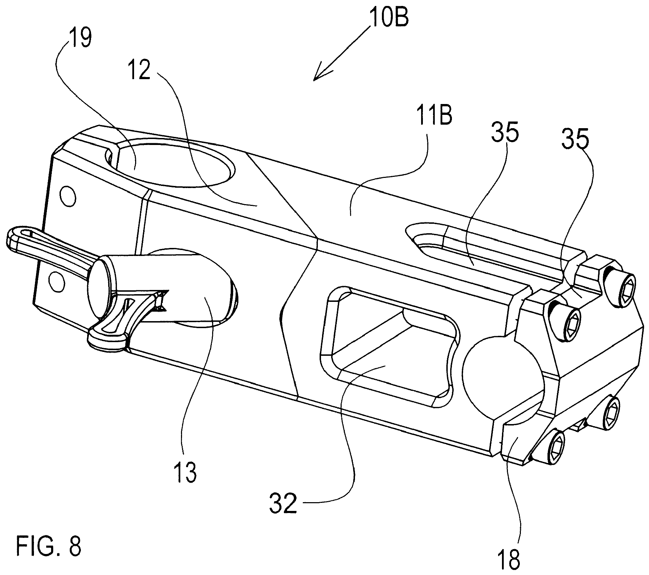

One of possible shape variants of the stem 10 is in further text marked as stem 10A for two-wheel vehicles, as shown at FIG. 2, while this said stem 10A consists of a front part 11A, a rear part 12 and a locking device 13.
Another of possible shape versions of the stem 10 is the stem 10B, as shown at FIG. 8 to FIG. 10, which consists of an extended front part 11B, a rear part 12 and a locking device 13.

For better clarity, the further text will contain separated description of the version 10A, which is also described as the first shape version of the stem, and separated description of the version 10B, which is also described as another shape version of the stem.
The said stem 10A is divided by an oblique cut into two parts, as visible mainly at FIG. 2, these two parts include the front part 11A and the rear part 12. The quoted oblique cut, which is made at the stem 10A, is advantageously done under the angle of 45° towards the imaginary axis of the stem 10A.

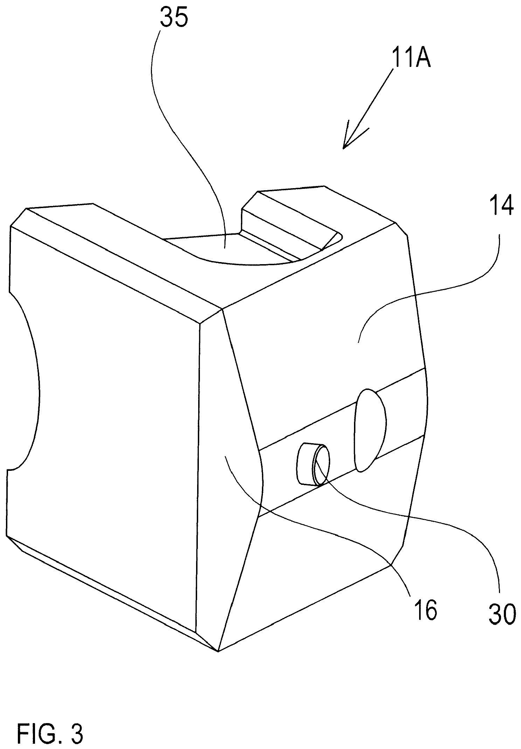

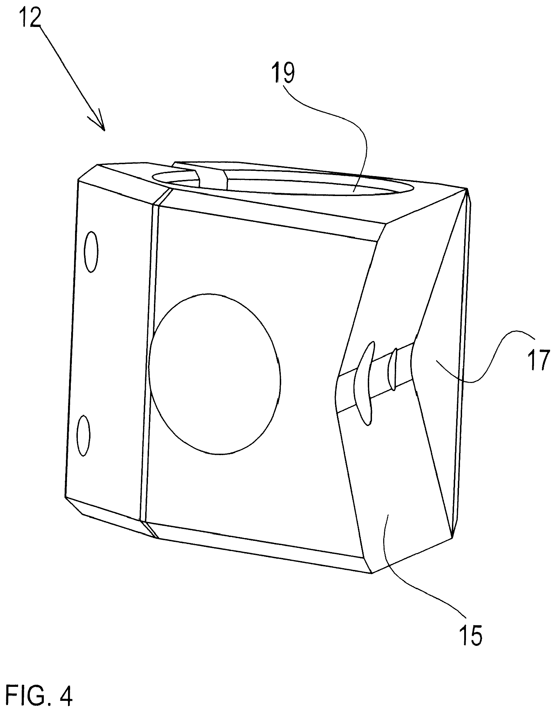

Unmarked contact areas of both said parts 11A and 12 of the stem 10A are modified in such a way that on the contact area of the front part 11 A one or more protrusions 14 are made, while on the opposing contact area of the rear part 12 one or more recesses 15 are made. Locations of the individual shape solutions of the protrusions 14, which are hereinafter described more closely, and which are made on the contact area of the front part 11A, are always identical to those of the individual recesses 15 made on the contact area of the rear part 12 of the stem 10A. The said protrusions 14 might be of various shapes and of various sizes, while their shape, size and location on the contact area of the front part 11 A are always identical with the shape, size and location of the said recesses 15, which are made on the contact area of the rear part 12 of the stem 10A.
The shape solutions of the said protrusions 14, as described above, while one of possible solutions being shown at FIG. 3, are located on the unmarked contact area of the front part 11A of the stem 10A.
The shape solutions of the said recesses 15, which are made on the unmarked contact area of the rear part 12, might be made in several shape variants. One of the many possible shape solutions of one or more projections 14, which are made on the unmarked contact area of the front part 11A of the stem 10A is, that it might be of the form of triangle, or a circular segment, or might be in the form of a rectangular projection, or also in the form of splines. One of the possible solutions of the recess 15 is shown at FIG. 4.
As stated above, the shape, size and location of all said shape solutions of the protrusions 14 are always identical to the shape, size and location of the said recesses 15.
The number of shape solutions of the individual quoted protrusions 14 as well as shape solutions or the individual recesses 15 is in no way exhausted by the examples, which are given above and which are shown at FIG. 3 and FIG. 4.
For further detailed description of one of many possible shape solutions of the quoted protrusions 14 as well as the recesses 15, the triangle-shaped solution has been chosen.

As indicated and closely described above, the shape, size and location of all quoted shape solutions of the protrusions 14 that are made on the unmarked contact area of the front part 11A is always identical with the shape, size and location of the quoted recesses 15 that are made on the unmarked contact area of the rear part 12 of the stem 10A. With regards to this said fact, the examples of shape versions of the protrusions 14 and recesses 15 are not further mentioned within this text.
The said protrusion 14, which is made on the unmarked contact area of the front part 11A of the stem 10A and which is of triangular shape, is advantageously made in obtuse angle, within the range from 90° to 150°.

As mentioned above and as shown at FIG. 4, the recess 15, which is made on the unmarked contact area of the rear part 12 of the stem 10A, is also of triangular shape. The said recess 15, which is made on the unmarked contact area of the rear part 12 of the stem 10A, is also of triangular shape and it is also advantageously made in obtuse angle, within the range from 90° to 150°.
It is obvious, that the said triangular shape of the protrusion 14 as well as of the recess 15 can be made in acute angle. If, however, the said triangular shape of the protrusion 14 and that of the recess 15 would be made in acute angle, the overall height of the triangular protrusion 14 as well as the depth of the recess 15 would increase, which would consequently negatively manifest itself in overall undesirable increase in length of the stem 10A.
Both areas of the legs of the triangular protrusion 14, which is made on the unmarked contact area of the front part 11A, do not meet each other in its highest point in a sharp edge, but they are advantageously arranged in such a way that one area of the unmarked leg of the said protrusion 14 in its highest point smoothly transforms by a smooth arc into the other leg of the said protrusion 14, as seen at FIG. 3.
The shape arrangement of the peak of the protrusion 14, which is closely described in the previous paragraph, is fully identical in shape and dimensions with the arrangement of the lowest point of the recess 15, the unmarked legs of the triangular arrangement of the recess 15 also do not meet each other in a sharp edge, but they are also arranged in such a way that one of the legs of the recess 15 smoothly transforms by a smooth arc into the other unmarked arm of the said recess 15, as shown at FIG. 4.

On the unmarked contact area of the front part 11A, as shown at FIG. 3, a bevel 16 is formed under the protrusion 14, passing across the whole length of the said front part 11A. On the face of the front part 11 A there is an unmarked half-circle recess, as shown at FIG. 3 and mainly at FIG. 2. This unmarked half-circle recess - as shown at FIG. 2 - is closed by a flange 18, in which is there is also an unmarked half-circle recess. The size and shape of both said half-circle recesses are identical. The flange 18 is removably mounted to the face of the front part 11A by means of unmarked fastening devices, such as bolts. Both said unmarked half-circle recesses then form an unmarked circular opening, into which the handlebars 21 of the two-wheel vehicle are removably mounted, as shown at FIG. 1. Since the flange 18 - using the unmarked fastening devices - can be mounted further from the face of the front part 11A or vice versa, the size of the unmarked circular opening can be thus changed. Such arrangement with advantage enables to mount into the said unmarked circular opening handlebars 21 of all types and sizes.

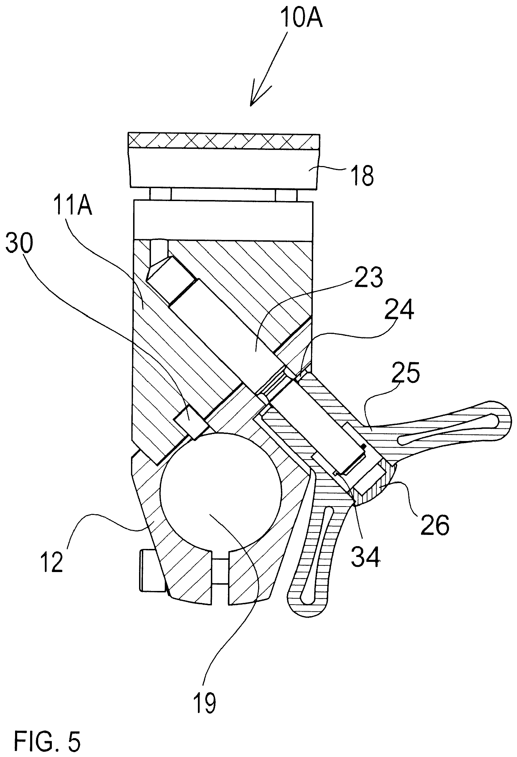

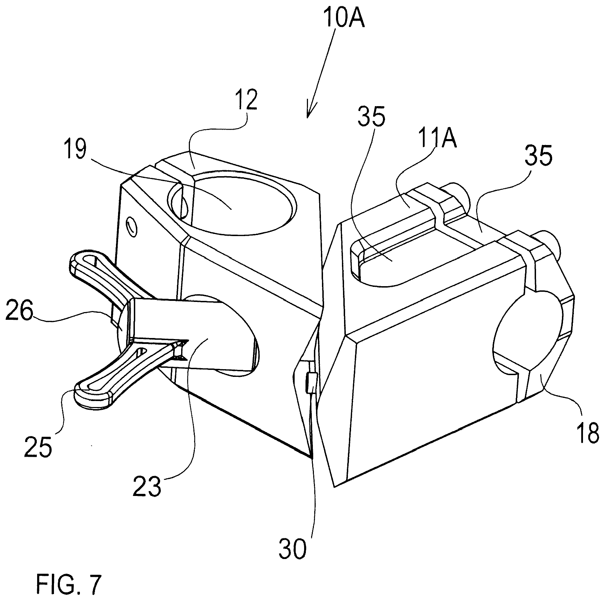

At the lowest point of the contact area of the rear part 12 of the stem 10A, which contains the recess 15, as shown at FIG. 4, a raised edge 17 is formed, which passes across the whole width of the said rear part 12.
In the rear part 12 there is made a through hole 19, as indicated at FIG. 2 as well as at FIG.5 and FIG. 7, which is intended for demountable and turning mounting of the front fork 22. The said front fork 22 passes through the hollow part of the head tube 20, which is a part of unmarked frame of the two-wheel vehicle, as shown at FIG. 1.

As shown at FIG. 2, the rear end of the rear part 12, in this the through hole 19 is made, is wedge-like narrowed, while an unmarked longitudinal slot is made in its vertex. The size of the slot can be changed by means of unmarked fastening devices, such as bolts. With regards to the design arrangement of the through hole 19 as described hereby, it is possible to removably mount into the said hole 19 the head tube 20, into which the front fork 22 is fitted. The shape arrangement of the said through hole 19 enables removable mounting of the head tube 20 with fitted front fork 22 of any type and size. The advantage of the said narrowing of both unmarked arms of the hole 19 is, that the force necessary for tightening of the unmarked fastening devices, such as bolts, in order to achieve the desirable demountable yet firm fastening of the head tube 20, which carries the front fork 22, is substantially lower. Another advantage of this wedge-like narrowing is, that is forms with advantage a significant shape element, which considerably improves the general aesthetical look of the stem 10A.

As obvious from FIG. 2 and mainly from FIG. 5, an unmarked oblique through hole is formed in the rear part 12 of the stem 10A, which is made also in the front part 11A in the same direction and under the same angle, where it is terminated as an unmarked blind hole. As shown at FIG. 5, the diameter of the unmarked through hole, which is made in the rear part 12 is greater than the diameter of the said blind hole, which is made in the front parts 11A of the stem 10A. The unmarked blind hole, which is made in the front part 11A is fitted with a fine-pitch thread.

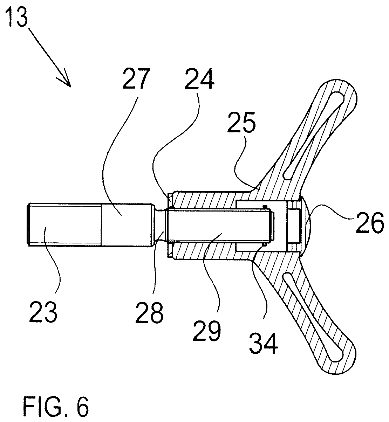

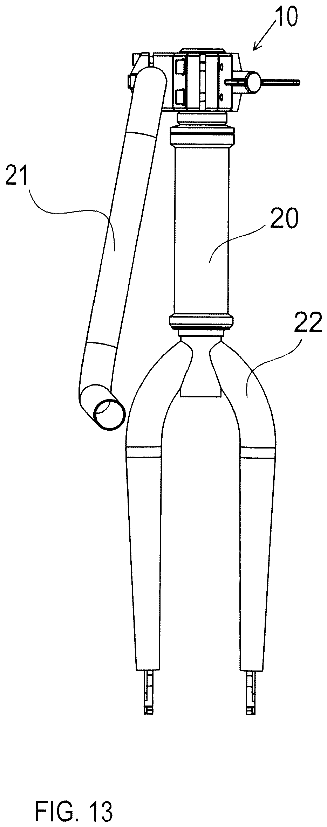

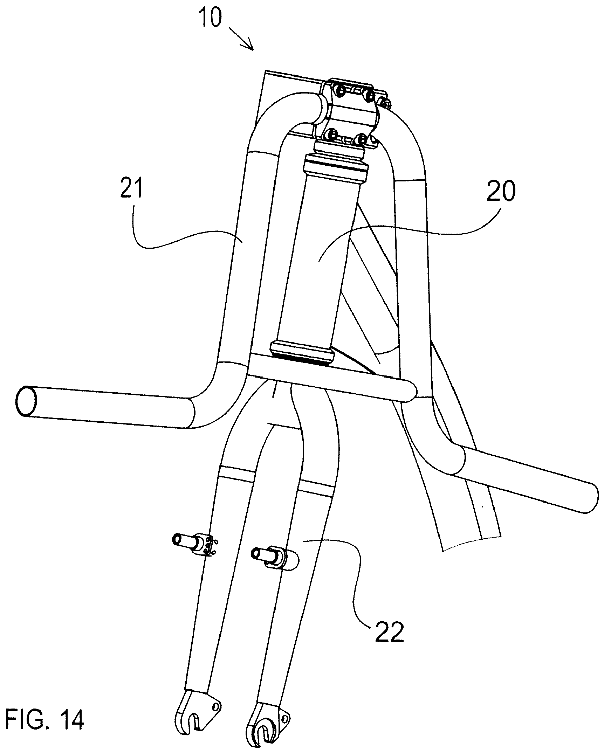

A locking device 13 is inserted into the said unmarked through hole, which is made in the rear part 12, and into the said blind hole, which is made in the front part 11A of the stem 10A. The purpose of the locking device 13 is - as more closely described further - to secure the required functionality of the stem 10A, as shown at FIG. 5 as well as at FIG. 7. The required functionality of the stem 10A according to the invention lies in the fact that it forms both demountable and firm fastening of the handlebars 21, which are perpendicular to the longitudinal axis of the unmarked frame of the two-wheel vehicle. The functionality of the stem 10A enables also axial shifting and at the same time turning of the individual above-described parts of the stem 10A towards each other by 180° in such a manner, that the said handlebars 21 would be after turning parallel to the imaginary longitudinal axis of the unmarked frame of the two-wheel vehicle, as shown at FIG. 13 and at FIG. 14.
The locking device 13, as shown at FIG. 6, consists of an arrestment bolt 23, a spring washer 24, an arrestment nut 25, which is with advantage equipped with unmarked wings, and further from a locking ring 34 and a lid 26.

The arrestment bolt 23 is in its lower part 27 as well as in its upper part 29 fitted with fine-pitched thread. As described above, the said unmarked blind hole, which is made in the front part 11A of the stem 10A, is also fitter with fine-pitched thread. The size of the thread, which is made on the lower part 27 of the arrestment bolt 23 and also its length is equal to all dimensions of the thread, which is made in the unmarked blind hole in the front part 11 A of the stem 10A. Diameter of the lower part 27 of the arrestment bolt 23 is greater, than the diameter of the upper part 29 of the said arrestment bolt 23. Both said parts 27 and 29 of the arrestment bolt 23 are separated from each other by a middle part 28.
The said arrestment bolt 23 is - by its lower part 27, which is fitted with fine-pitched thread - removably mounted in the fine-pitched thread, which is made in the unmarked blind hole made in the front part 11A of the stem 10A, as described above. The advantage of this arrangement, where both parts are fitted with fine-pitched threads, lies in the fact that it substantially improves strength of the joint between the front part 11A with the rear part 12 of the stem 10A by means of the arrestment bolt 23.
Length of the thread, which is made on the upper part 29 of the arrestment bolt 23, is chosen in such a manner, that it enables sufficient lengthwise shift of the arrestment nut 25 along the thread of the said upper part 29, as described above.
On the middle part 28 of the arrestment bolt 23 there is the spring washer 24 slidably mounted. The said rear part 12 is slidably and turnably mounted on the upper part 29 of the arrestment bolt 23, by means of the unmarked through hole, which is - as described above - made in the rear part 12 of the stem 10A.
As shown at FIG. 2 and mainly at FIG. 5, the arrestment nut 25 is removably mounted onto the thread of the upper part 28 of the arrestment bolt 23. The said arrestment nut 25 is with advantage fitted with unmarked wings, which considerably lowers the force, which is needed for releasing or tightening of the said nut 25. Another advantage is the arrestment nut 25 fitted with the unmarked wings is, that no tools are required for its releasing or tightening.
In order to prevent undesirable releasing of the arrestment nut 25 from the arrestment bolt 23, the locking ring 34 is used as an example of a possible solution. Prevention of undesirable releasing of the arrestment nut 25 from the arrestment bolt 23 may be of course solved by many other methods as well. One of many possible other methods is, that an unmarked blind hole fitted with thread is be made in the axis of the upper part 29 of the arrestment bolt 23. The arrestment nut 25 is then secured against undesirable loosening by means of an unmarked bolt, which is fitted in the thread made in the unmarked blind hole, which is made in the axis of the upper part 29 of the arrestment bolt 23, as described above. The same function of securing against undesirable loosening of the arrestment nut 25 from the thread of the arrestment bolt 23 can be ensured i.e. by an unmarked split-pin.
The lid 26 covers the unmarked threaded hole, which is made in the arrestment nut 25.

At FIG. 5 and also at FIG. 6 is shown mounting of the spring washer 24 on the upper part 29 of the arrestment bolt 23, by the locking device 13. When tightening the arrestmerit nut 25, the rear part 12 shifts towards the front part 11A of the stem 10A, which makes the arrestment nut 25 to rest against the spring washer 24. Due to flexibility of the said spring washer 24, upon tightening of the arrestment nut 25, the individual parts 11A and 12 of the stem 10A become firmly yet removably interconnected, creating conditions for safe riding with the unmarked two-wheel vehicle.)

From FIG. 3 as well as from FIG. 5 it is obvious, that in the front part 11A of the stem 10A another unmarked blind hole is made, parallel to the axis of the blind hole fitted with fine-pitched thread whose description is given above. A dowel pin 30 is inserted into the said unmarked blind hole. Fitting of the dowel pin 30 into the unmarked blind hole in the front part 11A with advantage diminishes the possibility of occurrence of undesirable micromovements of the said front part 11A towards the rear part 12 of the stem 10A.

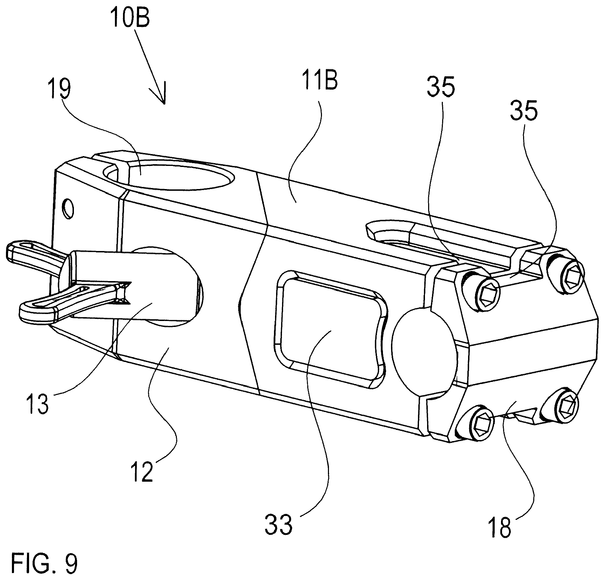

FIG. 7 and also FIG. 8 and FIG. 9 visually illustrate the result, which occurs after releasing of the arrestment nut 25 and after turning of the front part 11A with the handlebars 21 towards the rear part 12 of the stem 10A by 180°.
If that is necessary, for any reason, to modify the unmarked two-wheel vehicle in the a manner that the handlebars 21, which are normally perpendicular towards the imaginary axis of the said unmarked two-wheel vehicle, would become with advantage parallel to the imaginary axis of the said two-wheel vehicle, the rider will first loose the arrestment nut 25 up to such position, which is delimited by location of the locking ring 34 on the upper part 29 of the arrestment bolt 23.
By turning and thus shifting of the arrestment nut 25 on the thread of the upper part 29 of the arrestment bolt 23 it becomes possible to release the protrusion 14 of the front part 11A from the recess 15 of the rear part 12 and to move away the said front part 11 A from the rear part 12 of the stem 10A. The distance of the said parts 11A and 12 of the stem 10A after moving away from each other - as described above - is sufficient for turning of the said front part 11A together with handlebars 21 by 180° against their original position. Turning of the front part 11A together with handlebars 21 by 180° causes, that the said handlebars 21 get into parallel position with the imaginary axis of the unmarked two-wheel vehicle. Finally, the rider secures this new position of the front part 11A together with handlebars 21 by tightening the arrestment bolt 23, which prevents from undesirable movements of the said front part 11A with handlebars 21 towards the rear part 12 of the stem 10A as well as towards other unmarked parts of the two-wheel vehicle.

As soon as the reason for the above described turning of the front part 11A together with he handlebars 21 by 180° passes over, it is possible to return the said handlebars 21 together with the front part 11A into the riding position. As soon as this need comes, the rider turns the arrestment nut 25 on the thread of the arrestment bolt 23 in order to release the protrusion 14 of the front part 11A from the recess 15 of the rear part 12 and also to move the said front part 11A away from the rear part 12 of the stem 10A. The gap, which appears by the said operation, is sufficient to enable returning of the said front part 11 A together with handlebars 21, turning them by 180°. By turning the arrestment nut 25 on the thread of the arrestment bolt 23 in the opposite direction than described above will cause the individual parts 11A and 12 of the stem 10A together with handlebars 21 to get again removably mounted into the required unit in the required riding position and the unmarked two-wheel vehicle is again ready to ride.

As described above, the front part 11A of the stem 10A includes the bevel 16 and there is the edge 17 on the rear part 12 of the stem 10A. As soon as the stem 10A, using the said individual components of the locking device 13 is again put into the required unit and the required position, which is required for safe ride, the said edge 17, which is made at the rear part 12, fits into the said bevel 16, which is made at the front part 11A. The fitting of the edge 17 into the bevel 16 substantially increases the required strength of the stem 10A, which is necessary for safe ride of the unmarked two-wheel vehicle.

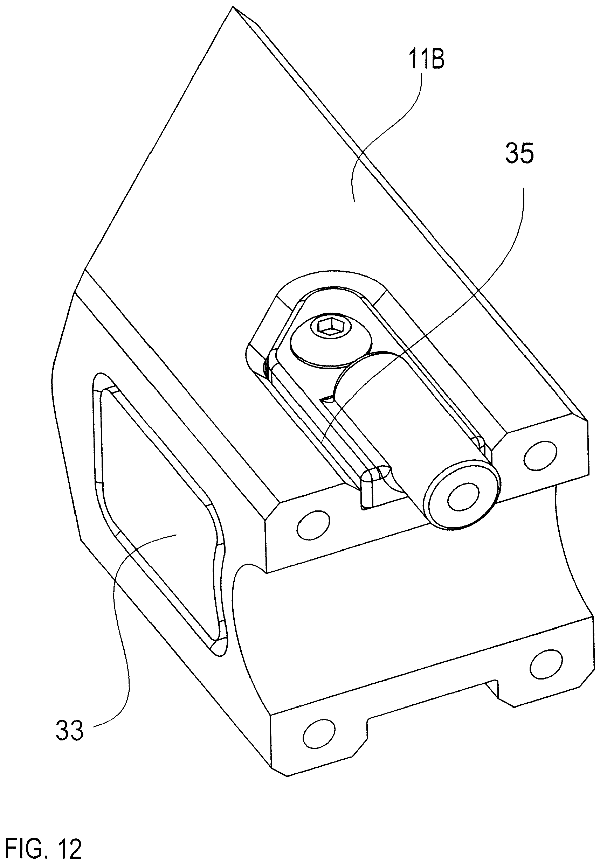

For the shape version of the stem 10A, there is a longitudinal recess 35 on the unmarked upper surface of the front part 11 A as well as on the unmarked upper surface of the flange 18, which is arranged in the imaginary axis of the said stem 10A, as shown at FIG. 2, further at FIG. 3 and also at FIG. 7.
The said longitudinal recess 35 is formed also at the shape version 10B, made in the same way as described above for the shape version 10A, on the unmarked upper surface of the front part 11B and on the unmarked upper surface of the flange 18, as shown at FIG. 8 and FIG. 9. The said longitudinal recess 35 can be used for installation of i.e. an unmarked holder, carrying i.e. a removably fitted lamp, as shown at FIG. 12, using unmarked fastening devices. Further, it is possible to mount into the longitudinal recess 35 i.e. a GPS or an adapter for dog leash, or a map holder, using the unmarked holder. The enumeration of the above-mentioned devices or accessories, which can be removably fitted into the said longitudinal recess 35, is in no way exhaustive.

Another possible version of the stem 10, which will be described hereinafter, is represented by the solution as shown at FIG. 8. This version of the stem 10 is in the following description, as well as at FIG. 8 to FIG. 10, marked as stem 10B.
The said stem 10B is also split with the oblique cut, as seen mainly at FIG. 8 and also at FIG. 9, into two parts, which consist of an extended front part 11B and the rear part 12. The quoted oblique cut is also with advantage made under the angle of 45° towards the imaginary longitudinal axis of the stem 10B.

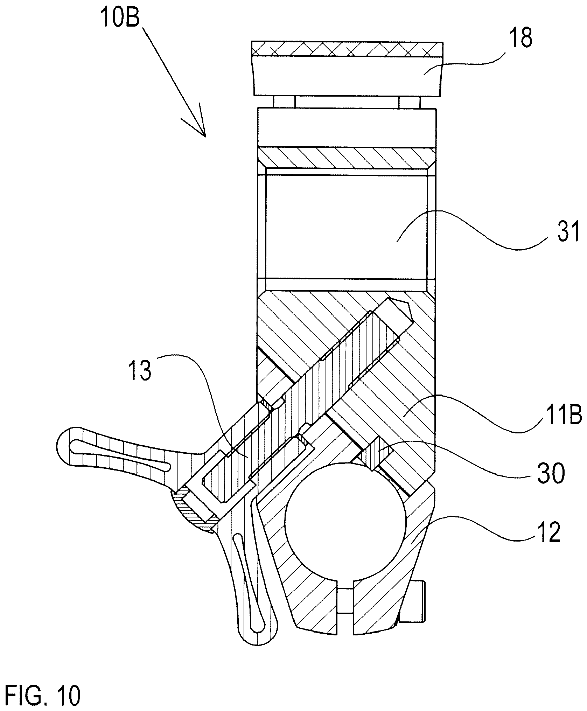

The individual parts, except of the extended front part 11B, of whose consist the version 10B of the stem and which are more closely described hereinafter, primarily their shape, size, their location as well as mutual arrangement of the parts towards each other, are fully identical with the shape, size, location as well as mutual arrangement of the parts, of whose consists the shape version 10A of the stem, again with the exception of the front part 11A.
Since the individual parts of the shape version 10A, as described above, are fully identical with all the individual parts of the shape version 10B, these parts will not be further mentioned in the description of the shape version 10B of the stem. The text describing the stem 10B will concentrate only onto the description of distinctions of certain parts, which form a part of the shape version 10B of the stem.
In the extended front part 11B of the stem 10B, there is an unmarked storage space, which can be carried out like a through hole 31, as obvious from FIG. 10, or in another case like a blind hole 32, as shown at FIG. 8.

Both variants of the said holes 31 or 32 can be with advantage - as said above - used as an unmarked storage space, into which it is possible to store small tools or an inner tube repair kit, or another small spare parts needed for fast repair of the two-wheel vehicle, as more closely described below.

The size of the unmarked storage space depends on the size of the extended front part 11B of the stem 10B, into which the said unmarked storage space is formed. The shape of the through hole 31 or the blind hole 32, which provide the unmarked storage space, may be of round or square or rectangular shape.

The said small tools or a inner tube repair kit or possibly other small spare parts necessary for fast repair of the two-wheel vehicle may be inserted one-by-one into the unmarked storage space, which is formed in the through hole 31 or the blind hole 32 in the stem 10B.
In another case, the said small tools or a inner tube repair kit or possibly other small spare parts necessary for fast repair of the two-wheel vehicle may be inserted as a group into an unmarked case, which is with advantage made of a flexible material. The said unmarked case is then inserted into the unmarked storage space, which is formed in the through hole 31 or the blind hole 32, together with the said tools or the said inner tube repair kit.

There are more ways how to achieve, that the small tools or the inner tube repair kit or another small spare parts necessary for fast repair of the two-wheel vehicle, which are inserted into the unmarked storage space, which is made in the extended front part 11B and which is formed like the through hole 31 or in another case like the blind hole 32, would not get released during the ride of the two-wheel vehicle and would not fall out of the said unmarked storage space. Of these many ways of securing the storage space has been chosen one, which is described further.
One of the possibilities is, that both unmarked entrances into the through hole 31 or one entrance in case of the blind hole 32 are secured with a lid 33, as said above.

The lid 33, which is with advantage made of a flexible material, is then inserted into both entrances of the through hole 31 or into one entrance of the blind hole 32 with minor interference.
If a failure occurs during ride at the two-wheel vehicle and it is possible to repair it right at place, the rider will slightly push the lid 33 with his finger. The lid 33 will flex under the finger pressure and due to its material properties will get easily released from the released and can be removed from either of the unmarked entries of the through hole 32 or of the unmarked entry of the blind hole 32. After releasing the lid 33 from the unmarked entries of the said holes 31 or 32, the rider may easily remove the small tools or the inner tube repair kit or any other small spare parts necessary for fast repair of the two-wheel vehicle.
Another possibility, how to facilitate releasing of the lid 33 from the entries of the said holes 31 or 32 is, that on the surface of the said lid 33 an unmarked holder is made. In case of need the rider may release the lid 33 from either of the entries into the said holes 31 or 32 by gently pulling on the holder. After releasing the lid 33 from the unmarked entries of the said holes 31 or 32, the rider may easily remove the said tools or the said repair kit.

In case that the said small tools or the inner tube repair kit or possibly any other small spare parts necessary for fast repair of the two-wheel vehicle are stored as a group into the unmarked case, which - as mentioned above - is made of a flexible material, its material properties are used with advantage. The benefit then is, that the unmarked case with stored small tools or the said repair kit will always adjust to the shape of the storage space after being inserted into the unmarked storage space made in the through hole 31 or in the blind hole 32, regardless whether the storage space has round or square or rectangular or any other shape.
If necessary for any reason to modify the unmarked two-wheel vehicle, which is equipped with the stem 10B, so that the handlebars 21, which have been so far positioned upright to the imaginary axis of the said two-wheel vehicle, would get with advantage into the position parallel to the imaginary axis of the said two-wheel vehicle, the drive will proceed in the same manner and carry out the same operation, as closely described above for the stem 10A.

### Industrial Applicability

The stem according to the invention can be with advantage used with a two-wheel vehicle, such as a bicycle, with a kick scooter or other two-wheel vehicles of similar kind. It is useful mainly in such cases, when diminishing of space required by the two-wheel vehicle is required, i.e. for its transportation on car rooftop or in the trunk, for its transportation from the production to a customer or a reseller, or for storage of the said two-wheel vehicle after the season, or in any similar occasion.

Further, the stem according to the invention can be with advantage used with all above mentioned types of two-wheel vehicles, so that the vehicle even in its basic version has a space for storing small tools or a inner tube repair kit.

The stem according to the invention is further with advantage fitter with a longitudinal recess, into which it is possible to demountably fit a holder carrying i.e. a lamp, GPS, a dog leash adapter or a map holder.

## Claims

1. A stem of a two-wheel vehicle is arranged in two shape versions, namely a stem (10A) and a stem (10B), while the stem (10A) is divided into the front part (11A) and a rear part (12), while the front part (11A) contains a protrusion (14), a bevel (16) and a recess (35), and where the rear part (12) contains a recess (13), an edge (17) and a dowel pin (30) while the stem (10A) further contains a flange (18) containing also a recess (35), and it further contains a locking device (13), which consists of an arrestment bolt (23), which consists of a lower part (27), a middle part (28) and a upper part (29), a flexible washer (24), an arrestment nut (25), a lid (26) and a locking ring (34), and where the stem (10B) is also divided into an extended front part (11B) and a rear part (12) and it contains other parts, which are equal to all those parts forming the stem (10A), while the extended front part (11B) contains a through hole (31) or a blind hole (32) and further a lid (33) and where on the front part (11A) and on the extended front part (11B) as well as on the flange (18), for both shape versions, there is made a longitudinal recess (35) **is characterized in that** the shape version of the stem (10A) is divided with a oblique cut to the front part (11A) and the rear part (12), while the said oblique cut is made under the angle of 45° towards the imaginary longitudinal axis of the stem (10A) and where the shape version of the stem (10B) is also divided with a oblique cut to the front part (11A) and the rear part (12), while the said oblique cut is also made under the angle of 45° towards the imaginary longitudinal axis of the stem (10B).

2. The stem of a two-wheel vehicle according to the patent claim 1 **is characterized in that** on the face of the front part (11), for both the shape version (10A) of the stem and for the shape version (10B) of the stem, there is a protrusion (14) of triangular shape, which is arranged in obtuse angle within the range between 90° and 150° and also by that on the face of the front part (11A) and (11B), for both shape versions (10A) and (10B), there is a dowel pin (30).

3. The stem of a two-wheel vehicle according to the patent claim 1 **is characterized in that** one arm of the triangular protrusion (14) made on the face of the front part (11A) or on the face of the extended front part (11B), transforms in its highest point by smooth curve into the other plane of the leg of the triangular protrusion (14).

4. The stem of a two-wheel vehicle according to the patent claim 1 **is characterized in that** on the face of the rear part (12), for both the shape version (10A) of the stem and for the shape version (10B) of the stem, there is a recess (15) of triangular shape, which is arranged in obtuse angle within the range between 90° and 150°, while the protrusion (14) and the recess (15) are identical in shape and dimensions.

5. The stem of a two-wheel vehicle according to the patent claim 1 **is characterized in that** one arm of the triangular recess (15) made on the face of the rear part (12), transforms in its lowest point by smooth curve into the other leg of the triangular recess (15).

6. The stem of a two-wheel vehicle according to the patent claim 1 **is characterized in that** on the upper side of the front part (11A) as well as on the upper side of the flange (18) for the shape version (10A) of the stem as well as on the upper side of the extended front part (11B) as well as on the upper side of the flange (18) for the shape version (10B) of the stem, there is a longitudinal recess (35) identical in size and shape, which is arranged within the imaginary axis of both said shape versions (10A) and (10B) of the stem.

7. The stem of a two-wheel vehicle according to the patent claim 1 **is characterized in that** for the shape version (10A) there is a oblique through hole made in the rear part (12), which in the same axis continues into the front part (11A) and there it ends like a blind hole, which is fitted with fine-pitched thread, while diameter of the oblique through hole, which is made in the rear part (12), is larger, than the diameter of the blind hole made in the front part (11A), and where for the shape version (10B) there is also a oblique through hole made in the rear part (12), which in the same axis continues into the extended front part (11B) and there it also ends like a blind hole, which is also fitted with fine-pitched thread, while diameter of the oblique through hole, which is made in the rear part (12), is larger, than the diameter of the blind hole made in the front part (11B).

8. The stem of a two-wheel vehicle according to any of the previous patent claims **is characterized in that** for the shape version (10A) an arrestment bolt (23), whose upper end (29) is fitted with fine pitched thread, is inserted into the through hole, which is made in the rear part (12); an arrestment nut (25) is fitted, onto upper end of the arrestment bolt (23), while the arrestment bolt (23) is mounted in the blind hole of the front part (11A), which is also fitted with fine pitched thread, by its lower end (27), while for the shape version (10B) an arrestment bolt (23), whose upper end (29) is fitted with fine pitched thread, is also inserted into the through hole, which is made in the rear part (12); an arrestment nut (25) is also fitted onto upper end of the arrestment bolt (23), while the arrestment bolt (23) is also mounted in the blind hole of the extended front part (11B), which is also fitted with fine pitched thread, by its lower end (27).

9. The stem of a two-wheel vehicle according to any of the previous patent claims **is characterized in that** the size of the thread on the lower end (27) or the arrestment bolt (23) and also its length is identical to all sizes of thread, which is made in the blind hole in the front part (11A) for the shape version (10A) of the stem or in the extended front part (11B) for the shape version (10B) of the stem.

10. The stem of a two-wheel vehicle according to any of the previous patent claims **is characterized in that** the lower end (27) of the arrestment bolt (23) is divided from the upper end (29) by a middle part (28), while the upper end (29) is fitted with a thread onto which is mounted a flexible washer (24), a locking ring (34) and an arrestment nut (25), whose threaded hole is closed with a lid (26).

11. The stem of a two-wheel vehicle according to any of the previous patent claims **is characterized in that** there is a bevel (16) on the front part (11A) for the shape version (10A) of the stem as well as on the extended front part (11B) for the shape version (10B) of the stem, and there is a modified edge (17) on the rear part (12).

12. The stem of a two-wheel vehicle according to any of the previous patent claims **is characterized in that** an storage space formed like a through hole (31) or in another case like a blind hole (32) made in the extended front part (11B) of the stem (10B), while the entrances into the through hole (31) or into the blind hole (32) of the said storage space are fitted with a lid (33).

## Amended claims

### Amended claims in accordance with Rule 137(2) EPC.

1. A stem (10) for a two-wheel vehicle is arranged in two shape versions, namely a stem (10A) and also a stem (10B), while the stem (10A) is divided with an oblique cut into a front part (11A) and a rear part (12), while the front part (11A) contains a protrusion (14), a bevel (16) and a recess (35), and where the rear part (12) contains a recess (13), an edge (17) and a dowel pin (30), while the stem (10A) further contains a flange (18) containing also a recess (35), and it further contains a locking device (13), which consists of an arrestment bolt (23), which consists of a lower part (27), a middle part (28) and a upper part (29), a flexible washer (24), an arrestment nut (25), a lid (26) and a locking ring (34), and where on the front part (11A) as well as on the flange (18) there is made a longitudinal recess (35) **is characterized in that** the stem (10) in the shape version (10A) is divided with an oblique cut to the front part (11A) and the rear part (12), while the said oblique cut is made under the angle of 45° towards the imaginary longitudinal axis of the shape version of the stem (10A).

2. The stem (10) for a two-wheel vehicle according to the patent claims 1 to 2 **is characterized in that** on the face of the front part (11), for the shape version (10A) of the stem, there is a protrusion (14) of triangular shape, which is arranged in obtuse angle within the range between 90° and 150° and also **in that** on the face of the front part (11A) there is a dowel pin (30).

3. The stem (10) for a two-wheel vehicle according to the patent claims 1 to 2 **is characterized in that** one arm of the triangular protrusion (14) made on the face of the front part (11A) of the shape version of the stem (10A), transforms in its highest point by smooth curve into the other plane of the leg of the triangular protrusion (14).

4. The stem (10) for a two-wheel vehicle according to the patent claims 1 to 3 **is characterized in that** on the face of the rear part (12), for the shape version of the stem (10A), there is a recess (15) of triangular shape, which is arranged in obtuse angle within the range between 90° and 150°, while the protrusion (14) and the recess (15) are identical in shape and dimensions.

5. The stem (10) for a two-wheel vehicle according to the patent claims 1 to 4 **is characterized in that** one arm of the triangular recess (15) made on the face of the rear part (12), transforms in its lowest point by smooth curve into the other leg of the triangular recess (15), for the shape variant (10A) of the stem.

6. The stem (10) for a two-wheel vehicle according to the patent claims 1 to 5 **is characterized in that** on the upper side of the front part (11A) as well as on the upper side of the flange (18) for the shape version (10A) of the stem, there is a longitudinal recess (35) identical in size and shape, which is arranged within the imaginary axis of the said shape versions (10A) of the stem.

7. The stem (10) for a two-wheel vehicle according to the patent claims 1 to 6 **is characterized in that** for the shape version (10A) there is a oblique through hole made in the rear part (12), which in the same axis continues into the front part (11A) and there it ends like a blind hole, which is fitted with fine-pitched thread, while diameter of the oblique through hole, which is made in the rear part (12), is larger, than the diameter of the blind hole made in the front part (11A).

8. The stem (10) for a two-wheel vehicle according to any of the previous patent claims **is characterized in that** for the shape version (10A) an arrestment bolt (23), whose upper end (29) is fitted with fine pitched thread, is inserted into the through hole, which is made in the rear part (12); an arrestment nut (25) is fitted onto upper end of the arrestment bolt (23), while the arrestment bolt (23) is mounted in the blind hole of the front part (11A), which is also fitted with fine pitched thread, by its lower end (27).

9. The stem (10) for a two-wheel vehicle according to any of the previous patent claims **is characterized in that** for the shape version (10A) of the stem the size of the thread on the lower end (27) or the arrestment bolt (23) and also its length is identical to all sizes of thread, which is made in the blind hole in the front part (11A).

10. The stem (10) for a two-wheel vehicle according to any of the previous patent claims **is characterized in that** for the shape version (10A) of the stem the lower end (27) of the arrestment bolt (23) is divided from the upper end (29) by a middle part (28), while the upper end (29) is fitted with a thread onto which is mounted a flexible washer (24), a locking ring (34) and an arrestment nut (25), whose threaded hole is closed with a lid (26).

11. The stem (10) for a two-wheel vehicle according to any of the previous patent claims **is characterized in that** there is a bevel (16) on the front part (11A) for the shape version (10A) of the stem and there is a modified edge (17) on the rear part (12).

12. The stem (10) for a two-wheel vehicle according to any of the previous patent claims **is characterized in that** for the shape version (10A) of the stem a longitudinal recess (35) is made on the unmarked upper surface of the flange (18), which is arranged in imaginary axis of the said stem (10A).

13. The stem (10) for a two-wheel vehicle according to any of the previous patent claims, where the stem (10) in the shape version (10B) consists as well from parts that are fully identical in their shape and design arrangement with all parts that form the stem (10) in the shape arrangement (10A) in such a manner, that the extended front part includes also a protrusion, bevel and recess, and where the rear part also includes a recess, edge and a dowel pin, while this shape version yet contains a fastening device, which includes an arrestment bolt that consists of its lower part, middle part and upper part, an flexible washer, arrestment nut, lid and a locking ring is **characterized in that** it is also divided with an oblique cut onto an extended front part (11B) and a rear part (12) and further **in that** an storage space formed like a through hole (31) or in another case like a blind hole (32) is made in the extended front part (11B), while the entrances into the through hole (31) or into the blind hole (32) of the said storage space are fitted with a lid (33) and where the longitudinal recess (35) is also made on the flange (18).
